# EUROPÄISCHE PATENTANMELDUNG

(11) **EP 1 431 609 A2**
(43) Veröffentlichungstag der Anmeldung: **23.06.2004**
(21) Anmeldenummer: 03028788.2
(22) Anmeldetag: 13.12.2003
(51) Int. Cl.: F16F 15/28

(54) **Drehschwingungsdämpfungseinrichtung**

(30) Priorität: 16.12.2002 DE 10258998
(71) Anmelder: LuK Lamellen und Kupplungsbau Beteiligungs KG, 77815 Bühl (DE)
(72) Erfinder: Lehmann, Steffen, 76275 Ettlingen (DE); Fechler, Christian, 76135 Karlsruhe (DE)

(57) **Zusammenfassung**

Es wird eine Drehschwingungsdämpfungseinrichtung, insbesondere ein Wangentilger, zur Anbringung an einer Kurbelwelle eines Kolbenmotors, insbesondere einer Brennkraftmaschine vorgeschlagen. Diese zeichnet sich dadurch aus , dass die Drehschwingungsdämpfungseinrichtung mehrere Blechteile umfasst.

## Beschreibung

Die Erfindung betrifft eine Drehschwingungsdämpfungseinrichtung, insbesondere einen Wangentilger, zur Anbringung an einer Kurbelwelle eines Kolbenmotors, insbesondere einer Brennkraftmaschine. Die Erfindung betrifft auch eine Kurbelwelle und einen Kolbenmotor mit einer Drehschwingungsdämpfungseinrichtung.

Herkömmliche Drehschwingungsdämpfungseinrichtungen für Kurbelwellen, insbesondere Wangentilger, umfassen oft eine Vielzahl von Gussteilen, die aufwendig nachgearbeitet werden müssen.

Aufgabe der Erfindung ist es daher, eine Drehschwingungsdämpfungseinrichtung, insbesondere einen Wangentilger, der eingangs geschilderten Art zu schaffen, der kostengünstig herstellbar ist.

Die Aufgabe ist bei einer Drehschwingungsdämpfungseinrichtung, insbesondere einem Wangentilger, zur Anbringung an einer Kurbelwelle eines Kolbenmotors, insbesondere einer Brennkraftmaschine, dadurch gelöst, dass die Drehschwingungsdämpfungseinrichtung mehrere Blechteile umfasst. Die Blechteile liefern den Vorteil, dass sie einfach und kostengünstig herstellbar sind. Die Blechteile können zum Beispiel aus gezogenem Blech hergestellt sein. Einzelne Bereiche der Blechteile, wie Bohrungen oder Aussparungen, können ausgestanzt sein. Es ist auch möglich, einzelne Bereiche der Blechteile spanend zu bearbeiten.

Ein bevorzugtes Ausführungsbeispiel der Drehschwingungsdämpfungseinrichtung ist dadurch gekennzeichnet, dass die Drehschwingungsdämpfungseinrichtung ein Gehäuse umfasst, das an der Kurbelwelle befestigt und mit dem, unter Zwischenschaltung von Federelementen, mindestens eine Drehmasse gekoppelt ist. Das liefert den Vorteil, dass die Drehschwingungsdämpfungseinrichtung vormontiert werden kann. Die vormontierte Drehschwingungsdämpfungseinrichtung kann dann in einem Montageschritt an der Kurbelwelle eines Kolbenmotors befestigt werden.

Ein weiteres bevorzugtes Ausführungsbeispiel der Drehschwingungsdämpfungseinrichtung ist dadurch gekennzeichnet, dass das Gehäuse ein im Wesentlichen topfförmiges Blechformteil mit einem Boden umfasst, der eine im Wesentlichen rechteckförmige Aussparung aufweist, die an einer Seite offen ist. Die Aussparung dient dazu, die Drehschwingungsdämpfungseinrichtung formschlüssig mit einem komplementär ausgebildeten Bereich der Kurbelwelle eines Kolbenmotors zu verbinden.

Ein weiteres bevorzugtes Ausführungsbeispiel der Drehschwingungsdämpfungseinrichtung ist dadurch gekennzeichnet, dass an dem Gehäuse im Bereich der Aussparung ein im Wesentlichen kreissegmentförmiger Ansatz ausgebildet ist. Der kreissegmentförmige Ansatz dient zur Befestigung der Drehschwingungsdämpfungseinrichtung an der Kurbelwelle eines Kolbenmotors.

Ein weiteres bevorzugtes Ausführungsbeispiel der Drehschwingungsdämpfungseinrichtung ist dadurch gekennzeichnet, dass in dem kreissegmentförmigen Ansatz mindestens ein Durchgangsloch vorgesehen ist. Das Durchgangsloch dient zur Aufnahme von Befestigungsmitteln, wie Schrauben, mit denen die Drehschwingungsdämpfungseinrichtung an der Kurbelwelle eines Kolbenmotors befestigt werden kann.

Ein weiteres bevorzugtes Ausführungsbeispiel der Drehschwingungsdämpfungseinrichtung ist dadurch gekennzeichnet, dass der Boden des Gehäuses einen runden Rand aufweist, der um 90° abgewinkelt ist. Der abgewinkelte oder abgebogene Rand begrenzt das Gehäuse in radialer Richtung nach außen.

Ein weiteres bevorzugtes Ausführungsbeispiel der Drehschwingungsdämpfungseinrichtung ist dadurch gekennzeichnet, dass das Gehäuse auf der dem Boden abgewandten Seite durch einen Deckel verschließbar ist, der von einem Blechteil gebildet wird. Die Außenkontur des Deckels ist vorzugsweise an die Innenkontur des abgewinkelten Randes des Gehäusebodens angepasst.

Ein weiteres bevorzugtes Ausführungsbeispiel der Drehschwingungsdämpfungseinrichtung ist dadurch gekennzeichnet, dass der Gehäuseboden und der Gehäusedeckel durch Abstandsbolzen aneinander befestigt sind. Die Abstandsbolzen gewährleisten eine beabstandete Anordnung der beiden Gehäuseteile. Der Gehäusedeckel kann aber auch durch eine Schweißverbindung, zum Beispiel an dem abgebogenen Rand des Bodens, an dem Gehäuseboden befestigt sein.

Ein weiteres bevorzugtes Ausführungsbeispiel der Drehschwingungsdämpfungseinrichtung ist dadurch gekennzeichnet, dass in dem Gehäuse mindestens eine Schwungmasse angeordnet ist, die von mindestens einem Blechteil gebildet wird. Das Blechteil kann, zum Beispiel durch Stanzen, kostengünstig hergestellt werden.

Ein weiteres bevorzugtes Ausführungsbeispiel der Drehschwingungsdämpfungseinrichtung ist dadurch gekennzeichnet, dass an der Schwungmasse radial außen mindestens ein Gleitelement angebracht ist. Das Gleitelement dient dazu, die Reibung zwischen der Schwungmasse und dem Gehäuse, insbesondere innen an dem abgewinkelten Rand des Gehäusebodens, zu minimieren. Zu diesem Zweck ist das Gleitelement vorzugsweise aus Kunststoff gebildet.

Ein weiteres bevorzugtes Ausführungsbeispiel der Drehschwingungsdämpfungseinrichtung ist dadurch gekennzeichnet, dass in dem Gehäuseboden, in der Schwungmasse und in dem Gehäusedeckel jeweils mindestens eine längliche Aussparung ausgebildet ist, die tangential so angeordnet ist, dass die Aussparungen in dem Gehäuseboden, der Schwungmasse und dem Gehäusedeckel im zusammengebauten Zustand der Drehschwingungsdämpfungseinrichtung fluchten. Die Aussparungen dienen zur Aufnahme von Druckfedern, durch welche die Schwungmasse mit dem Gehäuse gekoppelt ist.

Ein weiteres bevorzugtes Ausführungsbeispiel der Drehschwingungsdämpfungseinrichtung ist dadurch gekennzeichnet, dass an dem Gehäuseboden Durchgangslöcher zur Aufnahme von Wuchtnieten vorgesehen sind. Die Wuchtnieten werden je nach Bedarf in unterschiedlicher Größe und Anzahl an dem Gehäuseboden befestigt.

Ein weiteres bevorzugtes Ausführungsbeispiel der Drehschwingungsdämpfungseinrichtung ist dadurch gekennzeichnet, dass die Drehschwingungsdämpfungseinrichtung im Wesentlichen hufeisenförmig ausgebildet ist. Das liefert den Vorteil, dass die Drehschwingungsdämpfungseinrichtung bauraumneutral in die Kurbelwange einer Kurbelwelle integrierbar ist. Das bedeutet, dass sowohl der Gehäuseboden als auch der Gehäusedeckel hufeisenförmig ausgebildet sind.

Bei einer Kurbelwelle für einen Kolbenmotor, insbesondere für eine Brennkraftmaschine, mit mehreren Wangen, ist die oben angegebene Aufgabe dadurch gelöst, dass eine vorab beschriebene Drehschwingungsdämpfungseinrichtung in mindestens eine Wange der Kurbelwelle integriert ist.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: eine perspektivische, teilweise geschnittene Ansicht eines auf eine Kurbelwelle montierten Drehschwingungsdämpfers;
- Figur 2: eine weitere perspektivische Darstellung des montierten Drehschwingungsdämpfers aus Figur 1;
- Figur 3: eine perspektivische Darstellung des Gehäusebodens der Drehschwingungsdämpfungseinrichtung in Alleinstellung;
- Figur 4: eine weitere perspektivische Ansicht des Gehäusebodens aus Figur 3 in geteilter Form;
- Figur 5: eine Explosionsdarstellung des in den Figuren 1 und 2 gezeigten Drehschwingungsdämpfers;
- Figur 6: eine Explosionsdarstellung der Schwungmasse der in Figur 5 dargestellten Drehschwingungsdämpfungseinrichtung;
- Figur 7: eine perspektivische Darstellung als Strichzeichnung der Drehschwingungsdämpfungseinrichtung;
- Figur 8: den Drehschwingungsdämpfer aus Figur 7 in der Draufsicht;
- Figur 9: die Ansicht eines Schnitts entlang der Linie IX-IX in Figur 8;
- Figur 10: die Ansicht eines Schnitts entlang der Linie X-X in Figur 8 und
- Figur 11: die Ansicht eines Schnitts entlang der Linie XI-XI in Figur 10.

Drehschwingungsdämpfungseinrichtungen, die auch als Schwingungstilger bezeichnet werden können, werden eingesetzt, um unter anderem Torsionseigenfrequenzen von Kurbelwellen zu unterdrücken. In vielen Fällen ist eine solche Eigenfrequenz im Bereich von circa 300 bis 450 Hz vorhanden. Diese wird insbesondere durch die Ungleichförmigkeit in Folge der in den Kolben stattfindenden Kompression und Expansion angeregt. Ein Schwingen in der Torsionsresonanz kann zum Bruch der Kurbelwelle führen, weshalb Drehschwingungsdämpfer beziehungsweise Drehschwingungstilger eingesetzt werden. Die Drehschwingungsdämpfungseinrichtung wird auch als Torsionsschwingungsdämpfungseinrichtung bezeichnet.

Eine Drehschwingungsdämpfungseinrichtung mit Federkopplung besteht prinzipiell aus einer Drehmasse mit einem definierten Massenträgheitsmoment, die über Federelemente mit der Kurbelwelle verbunden ist. Aus der Verdrehsteifigkeit der Federelemente und dem Massenträgheitsmoment der Drehmasse ergibt sich die Eigenfrequenz des Dämpfers, die auf die Eigenfrequenz der Kurbelwelle abgestimmt sein muss. Durch die Drehschwingungsdämpfungseinrichtung werden die Schwingungseigenschaften der Kurbelwelle verändert. Das System erhält einen zusätzlichen Freiheitsgrad, bei Dämpfung null verschwindet die ursprüngliche Resonanzstelle völlig, dafür treten zwei neue Resonanzen auf. Bei einer sehr hohen Dämpfung ergibt sich keine Wirkung, der Dämpfer ist quasi starr angekoppelt, es zeigt sich annähernd die Grundresonanz der Kurbelwelle. Bei richtiger Auslegung der Dämpfung treten weder die neuen noch die ursprünglichen Resonanzen störend hervor.

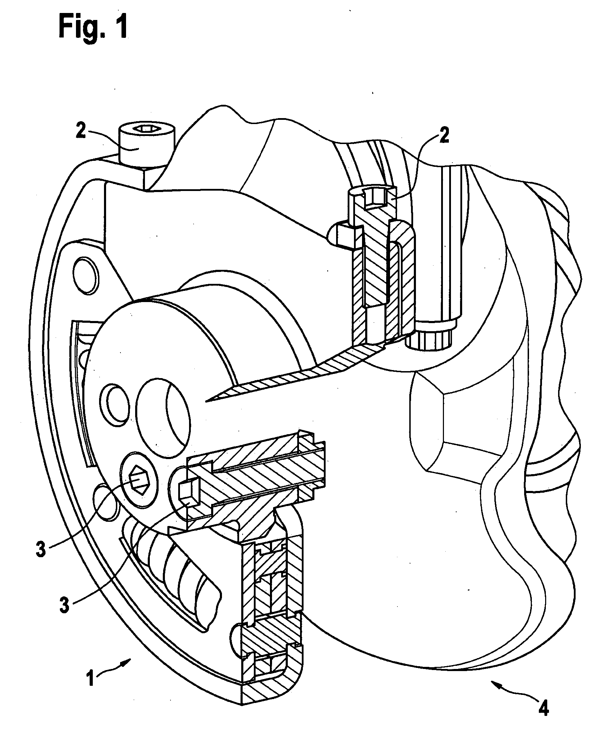

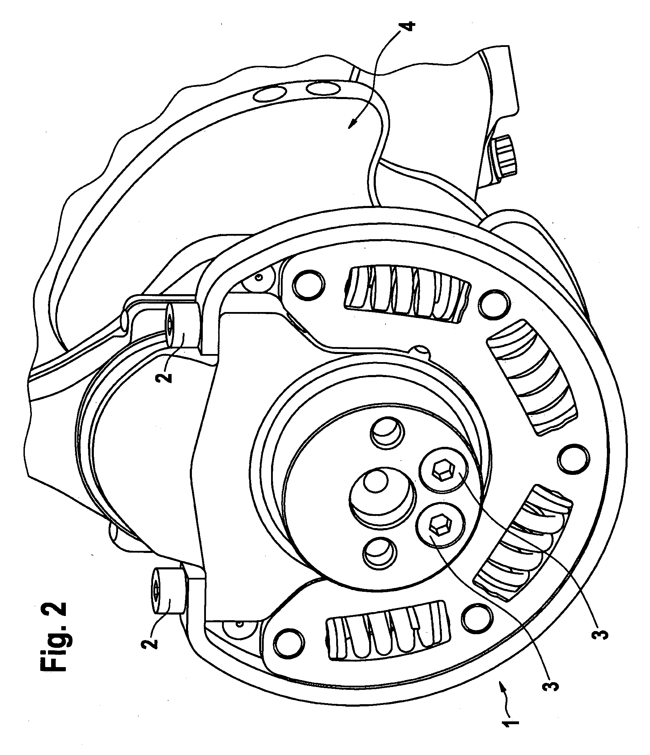

In den Figuren 1 und 2 ist ein Schwingungsdämpfer 1 gezeigt, der mit Schrauben 2 und 3 an einer Kurbelwelle 4 befestigt ist. Der Schwingungsdämpfer 1 befindet sich auf der ersten Kurbelwange und wird durch die zwei Radialschrauben 2 und die zwei Axialschrauben 3 an der Kurbelwelle befestigt und anschließend zusammen mit dieser in den Motorblock eingebaut. Der Schwingungsdämpfer 1 ersetzt gleichzeitig eines der Gegengewichte der Kurbelwelle 4.

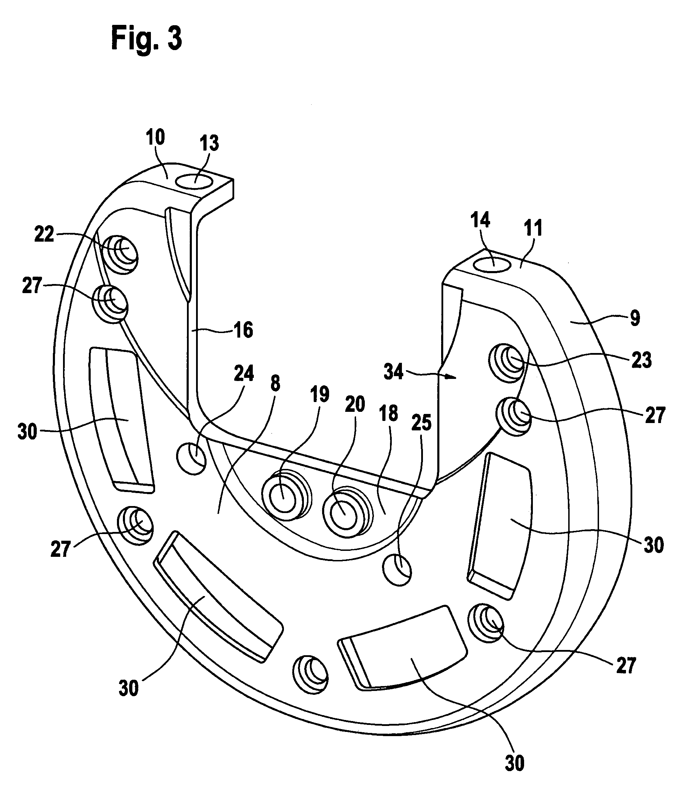

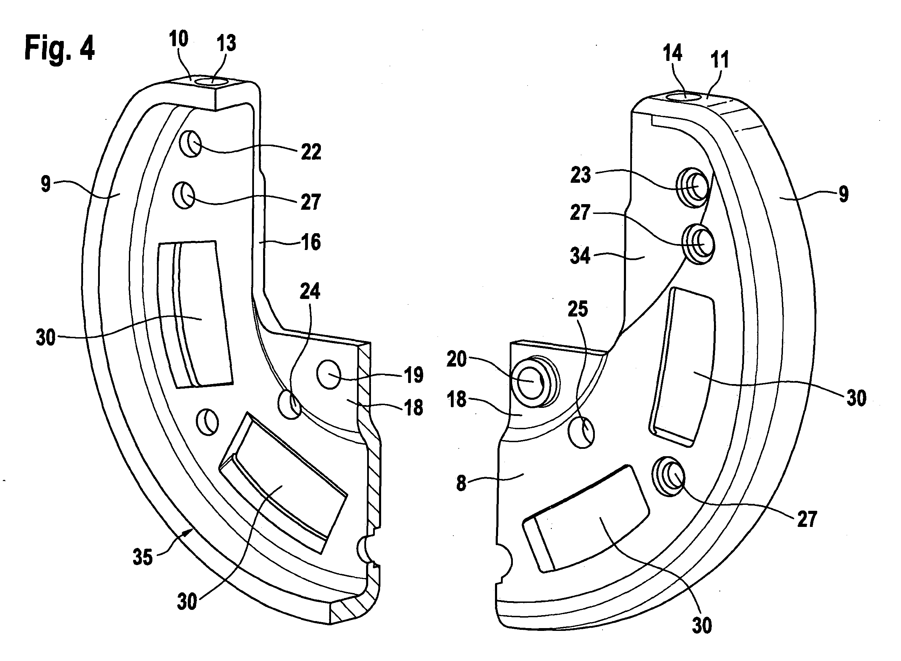

In den Figuren 3 und 4 ist ein Gehäuseboden 8, der in den Figuren 1 und 2 beschriebenen Schwingungsdämpfungseinrichtung 1 in Alleinstellung gezeigt. Der Gehäuseboden 8 hat im Wesentlichen die Gestalt einer Kreisscheibe, deren Rand 9 in einem Winkel von etwa 90° abgewinkelt ist. An dem abgewinkelten Rand 9 des Gehäusebodens 8 sind zwei Abflachungen 10 und 11 ausgebildet, in denen Durchgangslöcher 13 und 14 ausgespart sind. Die Durchgangslöcher 13 und 14 dienen zum Durchführen der in den Figuren 1 und 2 dargestellten Schrauben 2, die zur Befestigung der Drehschwingungsdämpfungseinrichtung 1 an der Kurbelwelle 4 dienen.

Zwischen den beiden Abflachungen 10 und 11 ist in dem Gehäuseboden 8 eine im Wesentlichen rechteckförmige Aussparung 16 angeordnet. Die Aussparung 16 ist an einer Seite offen und bildet einen Formschlussbereich, der eine formschlüssige Verbindung zwischen dem Gehäuseboden 8 und der Kurbelwelle (in den Figuren 3 und 4 nicht dargestellt) ermöglicht.

Im zentralen Bereich des Gehäusebodens 8 wird die rechteckförmige Aussparung 16 von einem kreissegmentförmigen Ansatz 18 begrenzt, in dem zwei Durchgangslöcher 19 und 20 vorgesehen sind. Die Durchgangslöcher 19 und 20 dienen zum Durchführen der in den Figuren 1 und 2 dargestellten Schrauben 3, die wiederum zum Befestigen des Drehschwingungsdämpfers an der Kurbelwelle dienen.

Außerdem sind in dem Gehäuseboden 8 radial außen in der Nähe des abgewinkelten Randes 9 Durchgangslöcher 22 und 23 zur Aufnahme von Wuchtnieten vorgesehen. Radial weiter innen angeordnet sind Montagebohrungen 24 und 25. Die Montagebohrungen 24 und 25 dienen zum Beispiel zur Aufnahme von Montagewerkzeugen oder Montierhilfen.

Radial außen, ebenfalls in der Nähe des abgewinkelten Randes 9, sind in dem Gehäuseboden 8 fünf Durchgangslöcher 27 vorgesehen, die zur Aufnahme beziehungsweise zum Befestigen von (nicht dargestellten) Abstandsbolzen dienen. Zwischen jeweils zwei Durchgangslöchern 27 ist ein längliches Fenster 30 angeordnet, das zur Aufnahme von (nicht dargestellten) Federelementen dient.

Der in den Figuren 3 und 4 dargestellte Gehäuseboden 8 ist aus gezogenem Blech gebildet. Die Durchgangslöcher 13, 14, 19, 20, 22, 23, 24, 25 und 27 sowie die Fenster 30 und die Aussparung 16 wurden aus dem gezogenen Blech ausgestanzt. Die Bereiche 34 und 35 des Gehäusebodens 8 sind spanend bearbeitet.

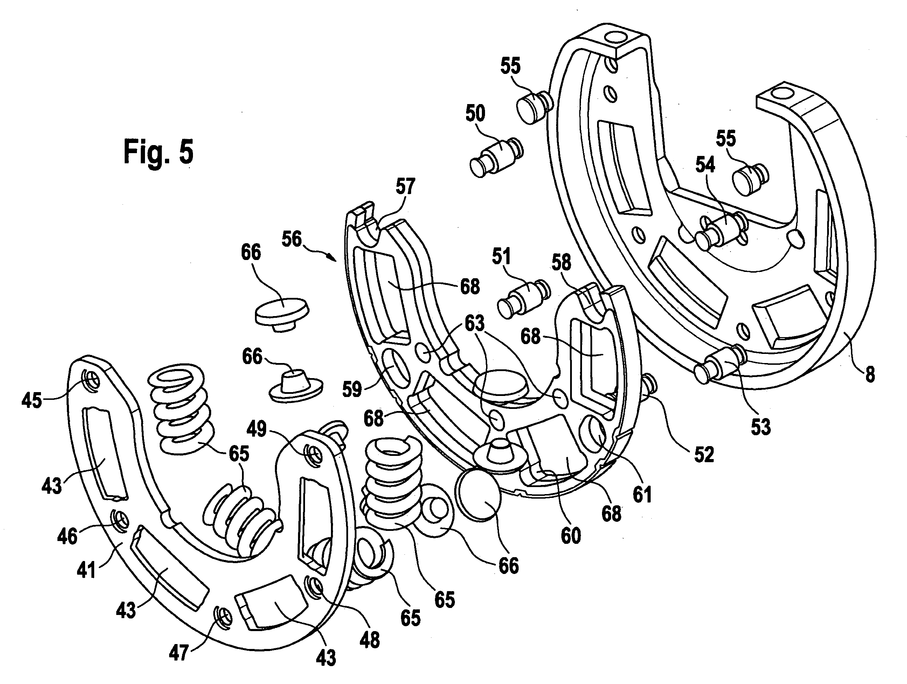

In Figur 5 sieht man, dass der Gehäuseboden 8, der auch als Gehäusetopf bezeichnet werden kann, durch einen Gehäusedeckel 41 verschließbar ist, der eine im Wesentlichen hufeisenförmige Gestalt aufweist. In dem Gehäusedeckel 41 sind vier Fenster 43 vorgesehen, die deckungsgleich zu den Fenstern 30 in dem Gehäuseboden 8 ausgebildet sind. Die Fenster 43 sind jeweils zwischen zwei Durchgangslöchern 45, 46; 46, 47; 47, 48 und 48, 49 angeordnet. Die Durchgangslöcher 45 bis 49 dienen, ebenso wie die Durchgangslöcher 27 in dem Gehäuseboden 8, zum Aufnehmen beziehungsweise Befestigen von Abstandsbolzen 50 bis 54. Die Abstandsbolzen 50 bis 54 dienen dazu, den Gehäusedeckel 41 in einem definierten Abstand zu dem Gehäuseboden 8 zu halten.

In Figur 5 sind ebenfalls Wuchtnieten 55 dargestellt, die, je nach Bedarf, in den Durchgangslöchern 22 und 23 im Gehäuseboden 8 angebracht werden können.

Durch die Abstandsbolzen 50 bis 54 wird zwischen dem Gehäuseboden 8 und dem Gehäusedeckel 41 radial innerhalb des abgewinkelten Randes 9 des Gehäusebodens 8 ein Aufnahmeraum für eine Schwungmasse 56 geschaffen, die ebenfalls eine hufeisenförmige Gestalt aufweist. Bei der Schwungmasse 56 handelt es sich, wie auch bei dem Gehäusedeckel 41, um ein ausgestanztes Blechteil. An den freien Enden der Schwungmasse 56 sind Einbuchtungen 57 und 58 für die Abstandsbolzen 50 und 54 vorgesehen. Die Einbuchtungen 57 und 58 sind so bemessen, dass im zusammengebauten Zustand die Drehschwingungsdämpfungseinrichtung ein Verdrehen der Schwungmasse in dem Gehäuse, das von dem Gehäuseboden 8 und dem Gehäusedeckel 41 gebildet wird, möglich ist, und zwar trotz des Vorhandenseins der Abstandsbolzen 50 und 54. Darüber hinaus sind in der Schwungmasse 56 Langlöcher 59, 60 und 61 ausgespart, durch welche im zusammengebauten Zustand der Drehschwingungsdämpfungseinrichtung die Abstandsbolzen 51, 52 und 53 hindurchragen. Die Langlöcher 59 bis 61 sind so bemessen, dass trotz des Vorhandenseins der Abstandsbolzen 51 bis 53 eine Drehbewegung der Schwungmasse 56 in dem Gehäuse möglich ist. Die Schwungmasse 56 kann einstückig oder mehrteilig ausgebildet sein. Im vorliegenden Fall umfasst die Schwungmasse 56 mehrere Teile, die durch Nieten 63 zusammengehalten werden.

Die Fenster 30, 43 und 68 in dem Gehäuseboden 8, dem Gehäusedeckel 41 und der Schwungmasse 56 dienen zur Aufnahme von Druckfedern 65, die durch Näpfe 66 geführt sind. Die Druckfedern 65 sind im eingebauten Zustand vorgespannt und koppeln die Schwungmasse 56 mit dem Gehäuse. Die in der Schwungmasse 56 vorgesehenen Fenster 68 weisen die gleiche Länge, aber eine größere Breite als die Fenster 43 in dem Gehäusedeckel 41 und die Fenster 30 in dem Gehäuseboden 8 auf. Die geringere Breite der Fenster 43 und 30 verhindert, dass die Druckfedern 65 durch die Fenster 30 und 43 aus dem Gehäuse herausfallen können. Zu diesem Zweck ist die Breite der Fenster 43 und 30 kleiner als der Durchmesser der Druckfedern 65. Die Breite der Fenster 68 in der Schwungmasse 56 ist etwas größer als der Durchmesser der Druckfedern 65.

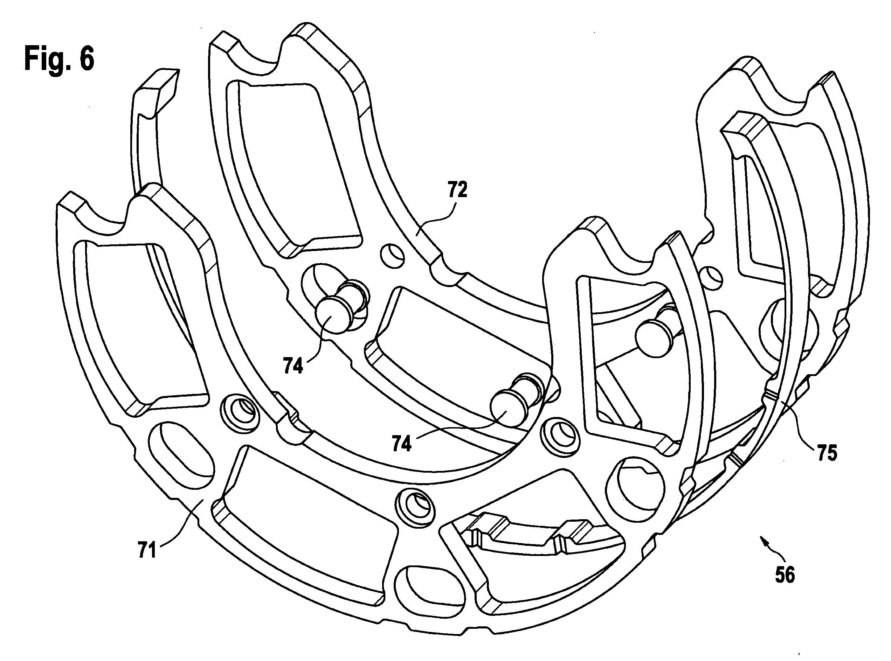

In Figur 6 sieht man, dass die Schwungmasse 56 aus Figur 5 aus einem ersten Blechteil 71 und einem zweiten Blechteil 72 gebildet ist. Die beiden Blechteile 71 und 72 werden durch Nieten 74 zusammengehalten, welche den Nieten 63 in Figur 5 entsprechen. Radial außen ist zwischen beziehungsweise an den beiden Blechteilen 71 und 72 ein Gleitelement 75 aus Kunststoff befestigt, das im Wesentlichen die Gestalt eines Kreisringabschnitts aufweist. Das Gleitelement 75 kommt im eingebauten Zustand an der Innenseite des abgewinkelten Randes 9 des Gehäusebodens 8 zur Anlage.

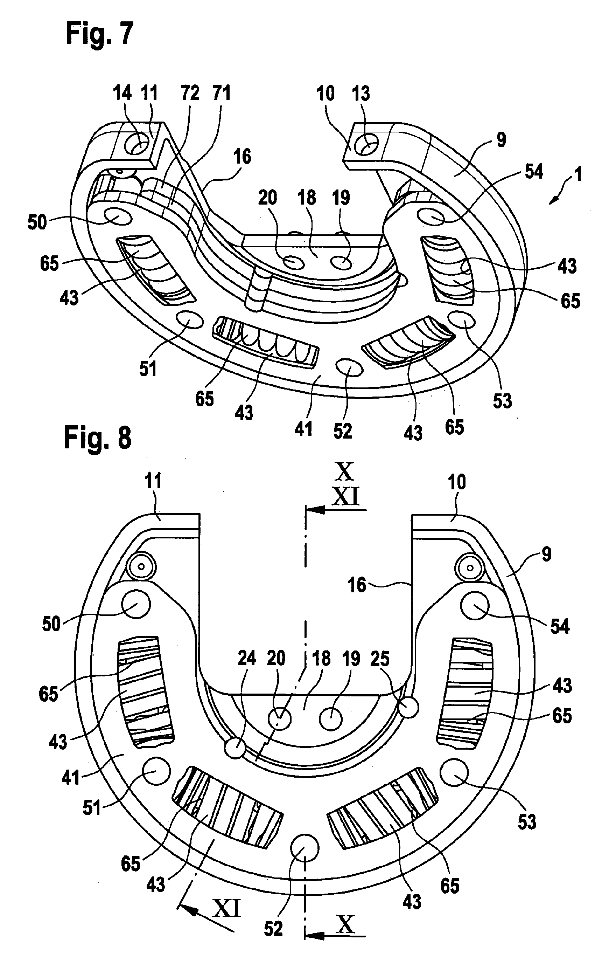

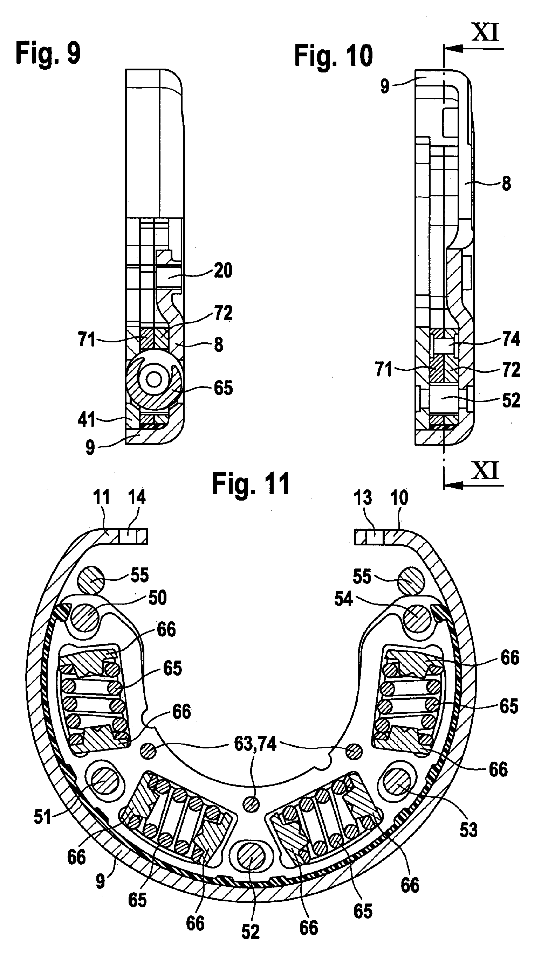

In den Figuren 7 bis 11 ist die Drehschwingungsdämpfungseinrichtung im zusammengebauten Zustand in verschiedenen Ansichten dargestellt. Die Erzeugung der Reibungsdämpfung erfolgt durch Kombination der Druckfedervorspannung und der Fliehkraft auf die Schwungmasse oder Tilgermasse. Zur Erzeugung einer Vorspannkraft und zusätzlicher Reibungserzeugung kann ein zusätzliches, axiales Federelement vorgesehen sein.

## Patentansprüche

1. Drehschwingungsdämpfungseinrichtung, insbesondere Wangentilger, zur Anbringung an einer Kurbelwelle (4) eines Kolbenmotors, insbesondere einer Brennkraftmaschine, **dadurch gekennzeichnet, dass** die Drehschwingungsdämpfungseinrichtung (1) mehrere Blechteile (8,41,56) umfasst.

2. Drehschwingungsdämpfungseinrichtung nach Anspruch 1, **dadurch gekennzeichnet, dass** die Drehschwingungsdämpfungseinrichtung (1) ein Gehäuse (8,41) umfasst, das an der Kurbelwelle (4) befestigt und mit dem, unter Zwischenschaltung von Federelementen (65), mindestens eine Drehmasse (56) gekoppelt ist.

3. Drehschwingungsdämpfungseinrichtung nach Anspruch 2, **dadurch gekennzeichnet, dass** das Gehäuse (8,41) ein im Wesentlichen topfförmiges Blechformteil mit einem Boden (8) umfasst, der eine im Wesentlichen rechteckförmige Aussparung (16) aufweist, die an einer Seite offen ist.

4. Drehschwingungsdämpfungseinrichtung nach Anspruch 3, **dadurch gekennzeichnet, dass** an dem Gehäuseboden (8) im Bereich der Aussparung (16) ein im Wesentlichen kreissegmentförmiger Ansatz (18) ausgebildet ist.

5. Drehschwingungsdämpfungseinrichtung nach Anspruch 3 oder 4, **dadurch gekennzeichnet, dass** in dem kreissegmentförmigen Ansatz (18) mindestens ein Durchgangsloch (19,20) vorgesehen ist.

6. Drehschwingungsdämpfungseinrichtung nach einem der Ansprüche 3 bis 5, **dadurch gekennzeichnet, dass** der Boden (8) des Gehäuses einen Rand (9) aufweist, der um 90° abgewinkelt ist.

7. Drehschwingungsdämpfungseinrichtung nach einem der Ansprüche 3 bis 6, **dadurch gekennzeichnet, dass** das insbesondere topfförmige Gehäuse durch einen Deckel (41) verschließbar ist, der von einem Blechteil gebildet wird.

8. Drehschwingungsdämpfungseinrichtung nach Anspruch 7, **dadurch gekennzeichnet, dass** der Gehäuseboden (8) und der Gehäusedeckel (41) durch Abstandsbolzen (50 bis 54) aneinander befestigt sind.

9. Drehschwingungsdämpfungseinrichtung nach einem der Ansprüche 2 bis 8, **dadurch gekennzeichnet, dass** in dem Gehäuse (8,41) mindestens eine Schwungmasse (56) angeordnet ist, die von mindestens einem Blechteil gebildet wird.

10. Drehschwingungsdämpfungseinrichtung nach Anspruch 9, **dadurch gekennzeichnet, dass** an der Schwungmasse (56) radial außen mindestens ein Gleitelement (75) angebracht ist.

11. Drehschwingungsdämpfungseinrichtung nach einem der Ansprüche 9 oder 10, **dadurch gekennzeichnet, dass** in dem Gehäuseboden (8), in der Schwungmasse (56) und dem Gehäusedeckel (41) jeweils mindestens eine längliche Aussparung (30,43,68) ausgebildet ist, die tangential so angeordnet ist, dass die Aussparungen in dem Gehäuseboden, in der Schwungmasse und dem Gehäusedeckel im zusammengebauten Zustand der Drehschwingungsdämpfungseinrichtung (1) fluchten.

12. Drehschwingungsdämpfungseinrichtung nach einem der Ansprüche 2 bis 11, **dadurch gekennzeichnet, dass** in dem Gehäuseboden (8) Durchgangslöcher (22,23) zur Aufnahme von Wuchtnieten (55) vorgesehen sind.

13. Drehschwingungsdämpfungseinrichtung nach einem der vorgehenden Ansprüche, **dadurch gekennzeichnet, dass** die Drehschwingungsdämpfungseinrichtung (1) im Wesentlichen hufeisenförmig ausgebildet ist.

14. Kurbelwelle für einen Kolbenmotor, insbesondere einer Brennkraftmaschine, mit mehreren Wangen, **dadurch gekennzeichnet, dass** eine Drehschwingungsdämpfungseinrichtung (1) nach einem der vorhergehenden Ansprüche in mindestens eine Wange der Kurbelwelle (4) integriert ist.

15. Kolbenmotor, insbesondere Brennkraftmaschine, mit einer Kurbelwelle (4) nach Anspruch 14.
